# EUROPÄISCHE PATENTSCHRIFT

(11) **EP 3 170 044 B1**
(45) Veröffentlichungstag und Bekanntmachung des Hinweises auf die Patenterteilung: **20.11.2019**
(21) Anmeldenummer: 15739555.9
(22) Anmeldetag: 15.07.2015
(51) Int. Cl.: G09F 13/04, G09F 23/00, G09F 9/33, G09F 13/22, A47L 15/42, F21V 8/00, G02B 6/43, F25D 27/00, D06F 39/00

(54) **ANZEIGEVORRICHTUNG UND HAUSHALTSGERÄT MIT EINER SOLCHEN ANZEIGEVORRICHTUNG**
DISPLAY DEVICE AND DOMESTIC APPLIANCE HAVING SUCH A DISPLAY DEVICE
DISPOSITIF D'AFFICHAGE ET APPAREIL MÉNAGER COMPORTANT UN TEL DISPOSITIF D'AFFICHAGE

(30) Priorität: 16.07.2014 DE 102014213803
(43) Veröffentlichungstag der Anmeldung: 24.05.2017
(73) Patentinhaber: BSH Hausgeräte GmbH, 81739 München (DE)
(72) Erfinder: ADAM, Paul, 93161 Sinzing / Viehhausen (DE)
(86) Internationale Anmeldenummer: PCT/EP2015/066113
(87) Internationale Veröffentlichungsnummer: WO 2016/008903

(56) Entgegenhaltungen:
- EP-A2- 1 505 560
- EP-A2- 1 505 560
- WO-A1-2004/068447
- JP-A- 2000 075 811
- JP-A- 2000 075 811
- JP-A- 2002 072 933
- JP-A- 2002 072 933
- US-A1- 2006 203 463
- US-A1- 2006 203 463

## Beschreibung

Die Erfindung betrifft eine Anzeigevorrichtung, aufweisend wenigstens ein Anzeigemittel, eine Leiterplatte mit wenigstens einem elektrischen Leuchtmittel, das zur Erzeugung von Licht aus elektrischer Energie auf der Leiterplatte kontaktiert ist, wenigstens einen Lichtleiter, der eine Einkopplungsfläche, eine Auskopplungsfläche und einen Lichtleitabschnitt aufweist, welcher ausgebildet ist, über die Einkopplungsfläche eintretendes Licht des Leuchtmittels an die Auskopplungsfläche zu leiten, welche an das Anzeigemittel optisch angekoppelt ist, und einen Halter, der an der Leiterplatte befestigt ist und der wenigstens eine Aufnahmetasche aufweist, in die der wenigstens eine Lichtleiter eingesetzt ist. Die Erfindung betrifft außerdem ein Haushaltsgerät, aufweisend eine solche Anzeigevorrichtung.

Die DE 10 2011 082 844 A1 beschreibt eine Beleuchtungsanordnung, welche eine Lichtquelle sowie ein der Lichtquelle zugeordnetes optisches Element aufweist. Das optische Element ist dabei dazu ausgebildet, das von der zugehörigen Lichtquelle emittierte Licht asymmetrisch abzustrahlen, wobei es unterschiedlich positionierbar ist. Die Lichtquelle wird hierbei vorzugsweise durch eine im Wesentlichen punktförmige Lichtquelle, insbesondere durch eine LED gebildet. Eine Befestigung des optischen Elements in einer Montageöffnung erfolgt dabei mit Hilfe von Schnapparmen, die am Umfang eines kegelförmigen Bereichs des optischen Elements verteilt angeordnet sind. Die Schnapparme weisen eine gewisse Flexibilität auf, so dass sie beim Einschieben des optischen Elements von der Unterseite her leicht ausweichen können. Ist das optische Element ausreichend tief eingesetzt, schnappen die Schnapparme nach außen und hintergreifen mit entsprechenden Rastnasen entsprechende Vorsprünge.

Die DE 10 2006 061 201 A1 offenbart eine Hausgeräteinstellvorrichtung, die eine Beleuchtungseinheit umfasst, welche dazu dient, ein Anzeigemittel zu beleuchten, welches einer eingestellten Hausgerätfunktion zugeordnet ist. Die Beleuchtungseinheit weist eine Leiterplatte auf. Auf der Leiterplatte ist ein als LED ausgebildetes Leuchtmittel angelötet angeordnet. Dieses Leuchtmittel erzeugt in einer ausgezogenen Verstellposition eines Einstellkörpers der Hausgeräteinstellvorrichtung einen Lichtstrahl, welcher durch eine Öffnung einer Wandung einer Aufnahmeeinheit abgestrahlt wird. Der Lichtstrahl fällt auf eine als Lichtleiter ausgebildete Lichttransporteinheit, die den Lichtstrahl bis zu einer Abstrahlungsstelle transportiert. Die Abstrahlungsstelle bildet ein Anzeigemittel und ist als ein transparenter Mantelring der Hausgeräteinstellvorrichtung ausgebildet.

Die JP 2002 072933 A beschreibt eine Anzeigevorrichtung, die eine Leiterplatte umfasst, auf der LEDs kontaktiert sind. Die LEDs sind über Lichtleiterabschnitte mit einem Anzeigefeld optisch verbunden.

Die EP 1 505 560 A2 beschreibt ein Lichtleiterbauteil mit einer Lichteintrittsseite und einer Lichtaustrittseite für optische Mehrsegmentanzeigen, das eine Maske aufweist, in der für jedes Segment ein Lichtleiter mit einem Querschnitt in Form des Segments geführt ist, und das in 2K-Spritzgußtechnik gefertigt ist, wobei zwischen der Maske und dem Lichtleiter durchgängig ein Luftspalt ausgebildet ist.

Die US 2006/203463 A1 beschreibt eine Frontblende eines Autoradios, bei dem eine Anzeigeeinheit eine Leiterplatte aufweist, die LEDs umfasst, wobei an die LEDs ein Lichtleitkörper optisch angekoppelt ist, der mittels eines Halters auf der Leiterplatte fixiert ist.

Die JP 2000 075811 A beschreibt eine Anzeigevorrichtung, bei der LEDs auf einer Leiterplatte angeordnet sind und die Lichtleiterbauteile in einer Gehäusehaube des Gerätes befestigt sind, so dass die Lichtleiterbauteile getrennt von der Leiterplatte befestigt sind.

Ferner offenbart die WO 2004/068447 ein Optikelement für Wechselverkehrszeichen, welches vollautomatisch montierbar ist. Dazu weist der Lichtleiter gemäß der WO 2004/068447 eine kegelstumpfförmige Grundgestalt auf, welche in eine korrespondierende Aufnahmetasche einführbar ist.

Die Aufgabe der Erfindung ist es, eine Anzeigevorrichtung, insbesondere eine Anzeigevorrichtung eines Haushaltsgeräts zu schaffen, die auf einfache, insbesondere kostengünstige Weise manuell und/oder automatisiert montiert werden kann.

Die Aufgabe der Erfindung wird gelöst durch eine Anzeigevorrichtung, aufweisend:
- wenigstens ein Anzeigemittel,
- eine Leiterplatte mit wenigstens einem elektrischen Leuchtmittel, das zur Erzeugung von Licht aus elektrischer Energie auf der Leiterplatte kontaktiert ist,
- wenigstens einen Lichtleiter, der eine Einkopplungsfläche, eine Auskopplungsfläche und einen Lichtleitabschnitt aufweist, der ausgebildet ist, über die Einkopplungsfläche eintretendes Licht des Leuchtmittels an die Auskopplungsfläche zu leiten, welche an das Anzeigemittel optisch angekoppelt ist, und
- einen an der Leiterplatte befestigten Halter, der den wenigstens einen Lichtleiter trägt und der wenigstens eine Aufnahmetasche aufweist, in die der wenigstens eine Lichtleiter eingesetzt ist, wobei der wenigstens eine Lichtleiter eine pyramidenstumpfförmige Grundgestalt aufweist und die Aufnahmetasche eine korrespondierende Innenwandfläche aufweist, so dass der wenigstens eine Lichtleiter in einer zur Ebene der Leiterplatte lotrechten Montagerichtung in die Aufnahmetasche passend einzustecken ist, und wobei
- der wenigstens eine Lichtleiter mindestens ein Rastmittel, insbesondere einen Rastvorsprung aufweist, welches Rastmittel in einer in die Aufnahmetasche formschlüssig eingesetzten Montagelage des Lichtleiters an einem Gegenrastmittel, insbesondere einem zum Rastvorsprung korrespondierenden Rasthinterschnitt formschlüssig verrastet ist.

Mittels des erfindungsgemäßen Halters kann eine montagefreundliche und kostengünstige Konstruktion einer Anzeigevorrichtung geschaffen werden, um wenigstens einen Lichtleiter auf einer Leiterplatte zu befestigen. Die Montage kann dabei wahlweise manuell oder automatisiert, insbesondere für eine Großserienfertigung, in gleicher montagefreundlicher und kostengünstiger Weise erfolgen.

Insbesondere Haushaltsgeräte wie Kältegeräte, Geschirrspüler, Waschmaschinen oder dgl. weisen im Allgemeinen mehrere Bedientasten auf, die in einer Reihe angeordnet sein können. Der Reihe von Bedientasten können mehrere Anzeigemittel zugeordnet sein. Die Bedientasten und die Anzeigemittel können in einer Frontblende des Haushaltsgeräts untergebracht sein. Im Inneren des Haushaltsgeräts sind dann, mit Ausnahme der sichtbaren Teile der Anzeigemittel selbst, optisch hinter der Frontblende verborgen, die übrigen Komponenten einer die Anzeigemittel umfassenden Anzeigevorrichtung angeordnet.

Die Anzeigevorrichtung umfasst eine Leiterplatte, welche in einem beispielsweise in das Haushaltsgerät eingebautem Zustand mit einer nicht näher dargestellten Steuervorrichtung des Haushaltsgeräts elektrisch verbunden ist. Auf der Leiterplatte können mehrere elektrische Leuchtmittel elektrisch kontaktiert angeordnet sein. Die Leuchtmittel sind zur Erzeugung von Licht aus elektrischer Energie auf der Leiterplatte kontaktiert. Die Leuchtmittel können in gleichmäßigen Abständen voneinander entfernt, entlang einer geraden Linie aufgereiht auf der Leiterplatte angeordnet sein. Die Leuchtmittel können durch LEDs gebildet werden, insbesondere von LEDs in SMD-Bauweise, d.h. als oberflächenmontierte Bauelemente gebildet. Statt solcher lichtemittierender Halbleiter-Bauelemente, können in variierten Ausführungsformen die Leuchtmittel jedoch beispielsweise auch von Glühlampen gebildet werden. Es können mehrere geometrisch gleiche Lichtleiter vorgesehen sein, die in dem Halter befestigt sind. Um ein Lichtübersprechen zwischen einzelnen Lichtleitern zu verhindern, kann wie weiter unten näher erläutert, der Halter eine das Lichtübersprechen verhindernde Einrichtung aufweisen. Durch die im Folgenden beschriebene Ausgestaltung der Lichtleiter kann auch eine möglichst gleichmäßige und helle Ausleuchtung von Symbolen, Zahlen und/oder Buchstaben oder sonstigen Zeichen der Anzeige erreicht werden.

Um das von dem jeweiligen Leuchtmittel ausgestrahlte Licht an das dazugehörige Anzeigemittel zu leiten, ist jedem Leuchtmittel ein separater Lichtleiter zugeordnet. Die Lichtleiter können alle dieselbe Gestalt aufweisen. Jeder Lichtleiter ist als ein separates Bauteil ausgeführt. Jeder Lichtleiter kann eine grob annähernd würfelförmige Gestalt aufweisen. Jeder Lichtleiter kann insoweit eine rechteckige, insbesondere quadratische Oberseite und eine rechteckige, insbesondere quadratische Unterseite, sowie wenigstens vier Seitenwände aufweisen.

Jeder Lichtleiter weist eine Einkopplungsfläche, eine Auskopplungsfläche und einen Lichtleitabschnitt auf, der ausgebildet ist, über die Einkopplungsfläche eintretendes Licht des Leuchtmittels an die Auskopplungsfläche zu leiten. Ein insbesondere aus transparentem Kunststoff gefertigte, oberseitig von der Auskopplungsfläche und unterseitig von der Einkopplungsfläche begrenzte Grundkörper des Lichtleiters bildet den Lichtleitabschnitt.

Die Anzeigemittel können unmittelbar von den Oberseiten der Lichtleiter, d.h. von den Auskopplungsflächen gebildet werden. Anders ausgedrückt kann das Anzeigemittel durch ein Aufleuchten der Auskopplungsfläche des Lichtleiters aktiviert werden. Alternativ kann das Anzeigemittel aber auch von einem auf dem Lichtleiter, d.h. der Auskopplungsfläche angebrachten, insbesondere aufgeklebten oder aufgedruckten Symbol, einer Zahl oder Buchstaben gebildet werden, welche über die Auskopplungsfläche des Lichtleiter von dem Leuchtmittel angeleuchtet, hinterleuchtet bzw. umleuchtet wird. Alle diese und analogen Ausgestaltungen haben insoweit aber gemeinsam, dass die Auskopplungsfläche optisch an das Anzeigemittel angekoppelt ist. Das Anzeigemittel ist dann insoweit aktiviert, wenn das Leuchtmittel leuchtet und das ausgesendete Licht über den Lichtleiter das Anzeigemittel beleuchtet, hinterleuchtet bzw. umleuchtet. Das Anzeigemittel ist demgemäß dann nicht aktiviert, wenn das Leuchtmittel nicht leuchtet, also ausgeschalten ist und kein Licht über den Lichtleiter das Anzeigemittel beleuchtet, hinterleuchtet bzw. umleuchtet, d.h. das Anzeigemittel dunkel bleibt.

Der Halter weist wenigstens eine Aufnahmetasche auf, in die der wenigstens eine Lichtleiter eingesetzt ist.

Die erfindungsgemäße Anzeigevorrichtung weist also einen Halter auf, der an der Leiterplatte befestigt ist und der wenigstens eine Aufnahmetasche aufweist, in die der wenigstens eine Lichtleiter eingesetzt ist. Bei mehreren Anzeigemitteln sind eine entsprechende Anzahl von Lichtleitern und eine entsprechende gleiche Anzahl von Aufnahmetaschen vorgesehen. Ein einstückiger Halter kann also beispielsweise drei, fünf oder sieben Aufnahmetaschen aufweisen. In äquivalenten Ausführungsvarianten kann der Halter eine beliebige andere Anzahl von Lichtleitern und eine entsprechende gleiche Anzahl von Aufnahmetaschen aufweisen. Entsprechend der Anordnung der Leuchtmittel können die Aufnahmetaschen und die Lichtleiter in dem Halter auch in gleichmäßigen Abständen voneinander entfernt, entlang einer geraden Linie aufgereiht angeordnet sein.

Der Halter kann wenigstens eine Rastvorrichtung aufweisen, die ausgebildet ist, den Halter formschlüssig an der Leiterplatte zu befestigen. Die Rastvorrichtung kann dabei derart ausgebildet sein, dass der Halter analog eines Aufsetzens von Halbleiterbauteilen auf die Leiterplatte, durch eine einfache, insbesondere senkrechte Steckbewegung manuell oder automatisiert auf der Leiterplatte befestigt, d.h. festgerastet werden kann.

In einer weiterbildenden Ausführung kann die Leiterplatte wenigstens eine Öffnung und/oder Aussparung aufweisen und die wenigstens eine Rastvorrichtung von einem Rastzapfen des Halters gebildet werden, der in einem eingerasteten Zustand des Halters in die wenigstens eine Öffnung der Leiterplatte eingreift und/oder die wenigstens eine Aussparung der Leiterplatte umgreift.

Es können dazu ein oder mehrere Rastzapfen am Halter ausgebildet sein. Jeder Rastzapfen kann sich von der Unterseite eines leistenförmigen Grundhalterkörpers des Halters nach unten vorspringend erstrecken. Der jeweilige Rastzapfen kann dabei einen federelastischen Schaft aufweisen, an dessen freiem Ende eine Rastnase angeordnet ist. Der Rastzapfen, d.h. der Schaft und die Rastnase können einteilig mit dem Grundhalterkörper hergestellt sein. Jedes freie Ende des Rastzapfens bzw. das Ende der Rastnase kann spitz, insbesondere keilförmig oder kegelförmig sich verjüngend ausgebildet sein, so dass die Rastzapfen leicht in die Öffnungen eingeführt werden können. Jede Rastnase kann einen Hinterschnitt aufweisen, der in der verrasteten Montageposition des Halters auf der Leiterplatte, auf einer dem Halter gegenüberliegenden Rückseite der Leiterplatte anliegt. Die Aussparung kann oder die Aussparungen können insbesondere randoffen ausgeführt sein, d.h. der oder die Rastzapfen können die Leiterplatte an einem oder mehreren Rändern umgreifen.

In einer speziellen Ausführung kann der Halter wenigstens eine erste Aufnahmetasche aufweisen, in die ein erster Lichtleiter eingesetzt ist und wenigstens eine zweite Aufnahmetasche aufweisen, in die ein zweiter Lichtleiter eingesetzt ist, wobei zwischen jeweils zwei benachbarten Aufnahmetaschen eine Trennwand angeordnet ist, welche ausgebildet ist, den einen Lichtleiter gegen Eintreten des aus dem jeweils anderen, benachbarten Lichtleiter austretenden Lichts optisch abzuschirmen.

Die Trennwand bzw. die Trennwände sind aus einem lichtundurchlässigen Material gebildet. Die Trennwände können insbesondere einteilig mit dem Halter ausgebildet sein.

Ganz allgemein kann die wenigstens eine Aufnahmetasche ausgebildet sein, den wenigstens einen Lichtleiter zumindest im Wesentlichen vollständig aufzunehmen, insbesondere lediglich unter Freilassen der Einkopplungsfläche und der Auskopplungsfläche einzuschließen. Jeder Lichtleiter wird in dieser Ausführungsform also über die gesamte Höhe seines Lichtleitabschnitts von seiner Aufnahmetasche bzw. von dem Halter optisch separiert eingeschlossen.

Erfindungsgemäß weist der wenigstens eine Lichtleiter eine pyramidenstumpfförmige Grundgestalt auf und die Aufnahmetasche weist eine korrespondierende Innenwandfläche auf, so dass der wenigstens eine Lichtleiter in einer zur Ebene der Leiterplatte lotrechten Montagerichtung in die Aufnahmetasche passend einzustecken ist. So kann eine einfache Montage durch senkrechtes Eindrücken der Lichtleiter in den Halter erfolgen.

Der wenigstens eine Lichtleiter kann eine zumindest im Wesentlichen rechteckige, insbesondere quadratische Auskopplungsfläche aufweisen und die Einkopplungsfläche insbesondere kleiner als die Auskopplungsfläche sein.

Erfindungsgemäß weist der wenigstens eine Lichtleiter mindestens ein Rastmittel, insbesondere einen Rastvorsprung auf, welches Rastmittel in einer in die Aufnahmetasche formschlüssig eingesetzten Montagelage des Lichtleiters an einem Gegenrastmittel, insbesondere einem zum Rastvorsprung korrespondierenden Rasthinterschnitt formschlüssig verrastet ist. Die Rastmittel können einstückig mit dem Lichtleiter ausgebildet sein, d.h. die Rastmittel können aus demselben Material hergestellt sein, wie die Lichtleiter. Die Rastnasen können klein gehalten werden, so dass sie einerseits keine nennenswerten zusätzlichen Materialkosten verursachen und andererseits keine optischen Nachteile auf das auszuleuchtende Anzeigemittel bewirken, Die Rastnasen sind insbesondere außerhalb der Einkopplungsfläche angeordnet. Jeder Lichtleiter kann beispielsweise an zwei gegenüberliegenden Seitenwänden des Lichtleiters, insbesondere in Nähe einer Unterkante des Lichtleitabschnitts jeweils ein mittig angeordnetes Rastmittel bzw. einen Rastvorsprung aufweisen. So können die Lichtleiter unter geringem Kraftaufwand in den Halter eingedrückt werden, insbesondere genau bis zu einem Anschlag, so dass die exakte Position des Lichtleiters bezüglich des Leuchtmittels durch den Halter sichergestellt ist.

Dazu kann in allen Ausführungsvarianten der wenigstens eine Lichtleiter mindestens eine Anschlagsfläche aufweisen, welche in einer in die Aufnahmetasche formschlüssig eingesetzten Montagelage des Lichtleiters an einer Gegenanschlagsfläche des Halters ansteht.

Die Erfindung betrifft demgemäß auch ein Haushaltsgerät, insbesondere ein Kältegerät, einen Herd, ein Kochfeld, eine Dunstabzugshaube, eine Geschirrspülmaschine, eine Waschmaschine oder einen Wäschetrockner, das eine erfindungsgemäße Anzeigevorrichtung, wie beschrieben, aufweist.

Ein konkretes Ausführungsbeispiel einer erfindungsgemäßen Anzeigevorrichtung ist in der nachfolgenden Beschreibung unter Bezugnahme auf die beigefügten Figuren näher erläutert. Konkrete Merkmale dieses Ausführungsbeispiels können unabhängig davon, in welchem konkreten Zusammenhang sie erwähnt sind, gegebenenfalls auch einzeln oder in Kombination betrachtet, allgemeine Merkmale der Erfindung darstellen.

Es zeigen:
- Fig. 1: eine perspektivische schematische Darstellung eines beispielhaften Haushaltsgeräts in Art einer Waschmaschine mit einer erfindungsgemäßen Anzeigevorrichtung,
- Fig. 2: eine perspektivische Explosionsdarstellung einer beispielhaften Ausführungsform einer erfindungsgemäßen Anzeigevorrichtung mit einer Leiterplatte, einem Halter und mehreren Lichtleitern; und
- Fig. 3: eine Querschnittsansicht durch die Anzeigevorrichtung gemäß Fig. 2 entlang eines Querschnitts durch einen der Lichtleiter.

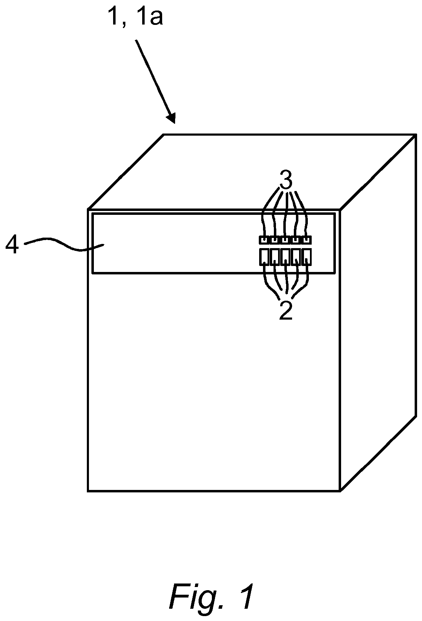

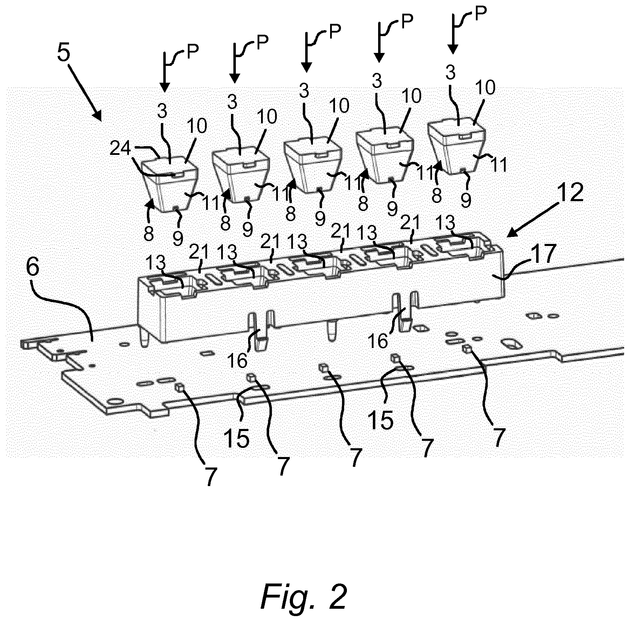

Ein in Fig. 1 beispielhaft dargestelltes Haushaltsgerät 1 ist als eine Waschmaschine 1a ausgebildet. Die Waschmaschine 1a weist mehrere, im Falle des dargestellten Ausführungsbeispiels fünf in einer Reihe angeordnete Bedientasten 2 auf. Oberhalb der Reihe von Bedientasten 2 sind mehrere, im Falle des dargestellten Ausführungsbeispiels fünf Anzeigemittel 3 angeordnet. Die mehreren Anzeigemittel 3 sind in gleicher Weise, wie die Bedientasten 2 in einer Reihe angeordnet, so dass jeder Bedientaste 2 ein eigenes Anzeigemittel 3 zugeordnet ist. Die Bedientasten 2 und die Anzeigemittel 3 sind in einer Frontblende 4 des Haushaltsgeräts 1 untergebracht. Im Inneren des Haushaltsgeräts 1 sind, mit Ausnahme der sichtbaren Teile der Anzeigemittel 3 selbst, optisch hinter der Frontblende 4 verborgen, die übrigen Komponenten einer die Anzeigemittel 3 umfassenden Anzeigevorrichtung 5 angeordnet. Diese Anzeigevorrichtung 5 ist in Fig. 2 näher dargestellt.

Die Fig. 2 zeigt die Anzeigevorrichtung 5 in Alleinstellung. Die Anzeigevorrichtung 5 weist die mehreren, im Falle des vorliegenden Ausführungsbeispiels insgesamt fünf Anzeigemittel 3 auf. Die Anzeigevorrichtung 5 umfasst eine in Fig. 2 schematisch dargestellte Leiterplatte 6, welche in einem in das Haushaltsgerät 1 eingebautem Zustand mit einer nicht näher dargestellten Steuervorrichtung des Haushaltsgeräts 1, bzw. der Waschmaschine 1a elektrisch verbunden ist. Auf der Leiterplatte 6 sind mehrere, im Falle des vorliegenden Ausführungsbeispiels insgesamt fünf elektrische Leuchtmittel 7 elektrisch kontaktiert angeordnet. Die Leuchtmittel 7 sind zur Erzeugung von Licht aus elektrischer Energie auf der Leiterplatte kontaktiert. Die Leuchtmittel 7 sind in gleichmäßigen Abständen voneinander entfernt, entlang einer geraden Linie aufgereiht auf der Leiterplatte 6 angeordnet. Die Leuchtmittel 7 werden im vorliegenden Ausführungsbeispiel durch LEDs gebildet, insbesondere von LEDs in SMD-Bauweise, d.h. als oberflächenmontierte Bauelemente gebildet. Statt solcher lichtemittierender Halbleiter-Bauelemente, können in variierten Ausführungsformen die Leuchtmittel 7 beispielsweise auch von Glühlampen gebildet werden.

Um das von dem jeweiligen Leuchtmittel 7 ausgestrahlte Licht an das dazugehörige Anzeigemittel 3 zu leiten, ist jedem Leuchtmittel 7 ein separater Lichtleiter 8 zugeordnet. In der dargestellten Ausführungsform weisen alle Lichtleiter 8 dieselbe Gestalt auf. Jeder Lichtleiter 8 ist als ein separates Bauteil ausgeführt. Jeder Lichtleiter 8 weist eine grob annähernd würfelförmige Gestalt auf. Jeder Lichtleiter 8 weist insoweit eine rechteckige, insbesondere quadratische Oberseite und eine rechteckige, insbesondere quadratische Unterseite, sowie wenigstens vier Seitenwände auf.

Jeder Lichtleiter 8 weist eine Einkopplungsfläche 9, eine Auskopplungsfläche 10 und einen Lichtleitabschnitt 11 auf, der ausgebildet ist, über die Einkopplungsfläche 9 eintretendes Licht des Leuchtmittels 7 an die Auskopplungsfläche 10 zu leiten. Im Falle des vorliegenden Ausführungsbeispiels wird die Einkopplungsfläche 9 von der Unterseite des Lichtleiters 8 gebildet und die Auskopplungsfläche 10 von der Oberseite des Lichtleiters 8 gebildet. Der aus transparentem Kunststoff gefertigte, oberseitig von der Auskopplungsfläche 10 und unterseitig von der Einkopplungsfläche 9 begrenzte Grundkörper des Lichtleiters 8 bildet den Lichtleitabschnitt 11.

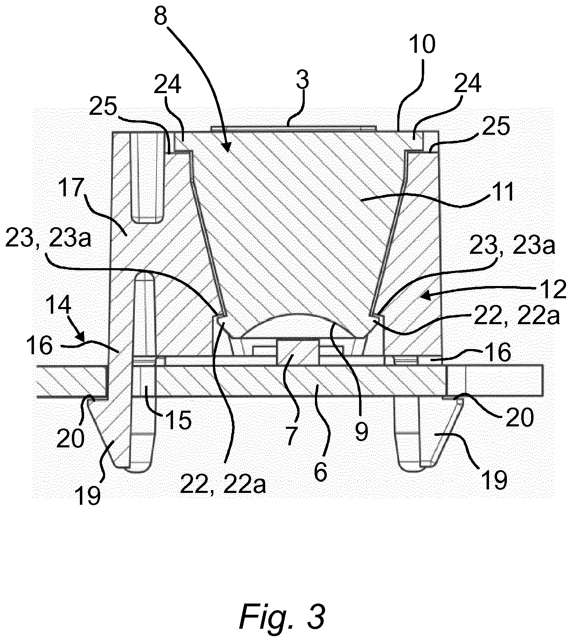

Im Falle des vorliegenden Ausführungsbeispiels werden die Anzeigemittel 3 unmittelbar von den Oberseiten der Lichtleiter 8, d.h. von den Auskopplungsfläche 10 gebildet. Anders ausgedrückt, wird das Anzeigemittel 3 durch ein Aufleuchten der Auskopplungsfläche 10 des Lichtleiters 8 aktiviert. Anders betrachtet kann das Anzeigemittel 3 aber auch, wie in der folgenden Fig. 3 dargestellt, von einem auf dem Lichtleiter 8, d.h. der Auskopplungsfläche 10 angebrachten, insbesondere aufgeklebten oder aufgedruckten Symbol, einer Zahl oder Buchstaben gebildet werden, welche über die Auskopplungsfläche 10 des Lichtleiter 8 von dem Leuchtmittel 7 angeleuchtet, hinterleuchtet bzw. umleuchtet wird. Alle diese und analogen Ausgestaltungen haben insoweit aber gemeinsam, dass die Auskopplungsfläche 10 optisch an das Anzeigemittel 3 angekoppelt ist. Das Anzeigemittel 3 ist dann insoweit aktiviert, wenn das Leuchtmittel 7 leuchtet und das ausgesendete Licht über den Lichtleiter 8 das Anzeigemittel 3 beleuchtet, hinterleuchtet bzw. umleuchtet. Das Anzeigemittel 3 ist demgemäß dann nicht aktiviert, wenn das Leuchtmittel 7 nicht leuchtet, also ausgeschalten ist und kein Licht über den Lichtleiter 8 das Anzeigemittel 3 beleuchtet, hinterleuchtet bzw. umleuchtet, d.h. das Anzeigemittel 3 dunkel bleibt.

Erfindungsgemäß weist die Anzeigevorrichtung 5 einen Halter 12 auf, der an der Leiterplatte 6 befestigt ist und der wenigstens eine Aufnahmetasche 13 aufweist, in die der wenigstens eine Lichtleiter 8 eingesetzt ist. Bei mehreren Anzeigemitteln 3, wie im Falle des vorliegenden Ausführungsbeispiels bei insgesamt fünf Anzeigemitteln 3, sind eine entsprechende Anzahl von Lichtleitern 8 und eine entsprechende gleiche Anzahl von Aufnahmetaschen 13 vorgesehen. Im Falle des vorliegenden Ausführungsbeispiels weist der einstückige Halter 12 also insgesamt fünf Aufnahmetaschen 13 auf. In äquivalenten, nicht dargestellten Ausführungsvarianten kann der Halter 12 eine beliebige andere Anzahl von Lichtleitern 8 und eine entsprechende gleiche Anzahl von Aufnahmetaschen 13 aufweisen. Beispielsweise kann der einstückige Halter 12 zur Bildung von drei Anzeigemitteln 3 drei Aufnahmetaschen 13 für drei Lichtleiter 8 aufweisen. In einem anderen Beispiel kann der einstückige Halter 12 zur Bildung von sieben Anzeigemitteln 3 sieben Aufnahmetaschen 13 für sieben Lichtleiter 8 aufweisen. Entsprechend der Anordnung der Leuchtmittel 7 sind die Aufnahmetaschen 13 und die Lichtleiter 8 in dem Halter 12 auch in gleichmäßigen Abständen voneinander entfernt, entlang einer geraden Linie aufgereiht angeordnet.

Der Halter 12 weist wenigstens eine Rastvorrichtung 14 auf, die ausgebildet ist, den Halter 12 formschlüssig an der Leiterplatte 6 zu befestigen. Die Rastvorrichtung 14 kann dabei derart ausgebildet sein, dass der Halter 12 analog eines Aufsetzens von Halbleiterbauteilen auf die Leiterplatte 6, durch eine einfache, insbesondere senkrechte Steckbewegung manuell oder automatisiert auf der Leiterplatte 6 befestigt, d.h. festgerastet werden kann.

Dazu kann, wie im dargestellten Ausführungsbeispiel der Fig. 2 und Fig. 3 gezeigt, die Leiterplatte 6 wenigstens eine Öffnung 15 und/oder Aussparung aufweisen und die wenigstens eine Rastvorrichtung 14 von einem Rastzapfen 16 des Halters 12 gebildet werden, der in einem einrasteten Zustand des Halters 12 in die Öffnung 15 der Leiterplatte 6 eingreift und/oder die Aussparung der Leiterplatte 6 umgreift. Es können ein oder mehrere Rastzapfen 16 am Halter 12 ausgebildet sein. Wie dargestellt, kann jeder Rastzapfen 16 sich von der Unterseite eines leistenförmigen Grundhalterkörper 17 nach unten vorspringend erstrecken. Der Rastzapfen 16 weist dazu einen federelastischen Schaft auf, an dessen freiem Ende eine Rastnase 19 angeordnet ist. Der Rastzapfen 16, d.h. der Schaft und die Rastnase 19 können einteilig mit dem Grundhalterkörper 17 hergestellt sein. Jedes freie Ende des Rastzapfens 16 bzw. das Ende der Rastnase 19 ist spitz, insbesondere keilförmig oder kegelförmig sich verjüngend ausgebildet, so dass die Rastzapfen 16 leicht in die Öffnungen 15 eingeführt werden können. Jede Rastnase 19 weist einen Hinterschnitt 20 auf, der in der verrasteten Montageposition des Halters 12 auf der Leiterplatte 6, auf einer dem Halter 12 gegenüberliegenden Rückseite der Leiterplatte 6 anliegt.

Wie in Fig. 2 gezeigt, weist der Halter wenigstens eine erste Aufnahmetasche 13 auf, in die ein erster Lichtleiter 8 eingesetzt ist und wenigstens eine zweite benachbarte Aufnahmetasche 13 auf, in die ein zweiter Lichtleiter 8 eingesetzt ist. Zwischen jeweils zwei benachbarten Aufnahmetaschen 13 ist eine Trennwand 21 angeordnet, welche ausgebildet ist, den einen Lichtleiter 8 gegen Eintreten des aus dem jeweils anderen, benachbarten Lichtleiter 8 austretenden Lichts optisch abzuschirmen. Es ist somit zwischen jeweils zwei benachbarten Aufnahmetaschen 13 jeweils eine Trennwand 21 angeordnet. Bei den im Ausführungsbeispiel fünf Aufnahmetaschen 13 sind also vier Trennwände 21 vorgesehen. Die Trennwände 21 sind aus einem lichtundurchlässigen Material gebildet. Die Trennwände 21 können, wie dargestellt, insbesondere einteilig mit dem Halter 12 ausgebildet sein.

Jede Aufnahmetasche 13 ist derart ausgebildet, dass der zugehörige Lichtleiter 8 zumindest im Wesentlichen vollständig aufgenommen ist, insbesondere lediglich unter Freilassen der Einkopplungsfläche und der Auskopplungsfläche in der Aufnahmetasche 13 eingeschlossen ist. Jeder Lichtleiter 8 wird also über die gesamte Höhe seines Lichtleitabschnitts 11 von den Aufnahmetaschen 13 bzw. von dem Halter 12 optisch separiert eingeschlossen.

Jeder Lichtleiter 8 weist im dargestellten Ausführungsbeispiel eine pyramidenstumpfförmige Grundgestalt auf und die Aufnahmetaschen 13 weisen eine korrespondierende Innenwandfläche auf, so dass jeder Lichtleiter 8 in einer geraden, insbesondere zur Ebene der Leiterplatte 6 lotrechten Montagerichtung (Pfeilrichtung P) in die Aufnahmetasche 13 passend manuell oder automatisiert eingesteckt werden kann.

Jeder Lichtleiter 8 weist eine zumindest im Wesentlichen rechteckige, insbesondere quadratische Auskopplungsfläche 10 auf, wobei die Einkopplungsfläche 9 im Falle des vorliegenden Ausführungsbeispiels kleiner ist, als die Auskopplungsfläche 10.

Wie in Fig. 3 näher gezeigt, muss die Einkopplungsfläche 9 nicht notwendiger Weise eben ausgeführt sein. Vielmehr kann es vorteilhaft sein, wenn die Einkopplungsfläche 9, wie dargestellt, die Form einer Kugelkalotte aufweist, so dass das von dem Leuchtmittel 7 ausgesandte Licht besser in den Lichtleitabschnitt 11 eingekoppelt werden kann.

Jeder Lichtleiter 8 weist mindestens ein Rastmittel 22, insbesondere einen Rastvorsprung 22a auf, welches in einer in die Aufnahmetasche 13 formschlüssig eingesetzten Montagelage (gemäß Fig. 3) des Lichtleiters 8 an einem Gegenrastmittel 23, insbesondere einem zum Rastvorsprung 22a korrespondierenden Rasthinterschnitt 23a formschlüssig verrastet ist. Jeder Lichtleiter 8 kann beispielsweise an zwei gegenüberliegenden Seitenwänden des Lichtleiters 8, insbesondere in Nähe einer Unterkante des Lichtleitabschnitts 11 jeweils ein mittig angeordnetes Rastmittel 22 bzw. einen Rastvorsprung 22a aufweisen.

Außerdem weist jeder Lichtleiter 8 im Falle des dargestellten Ausführungsbeispiels zwei seitlich vorspringende Anschlagsflächen 24 auf, welche in einer in die Aufnahmetasche 13 formschlüssig eingesetzten Montagelage des Lichtleiters 8 an einer Gegenanschlagsfläche 25 des Halters 12 anstehen.

### BEZUGSZEICHENLISTE

- 1: Haushaltsgerät
- 1a: Waschmaschine
- 2: Bedientasten
- 3: Anzeigemittel
- 4: Frontblende
- 5: Anzeigevorrichtung
- 6: Leiterplatte
- 7: Leuchtmittel
- 8: Lichtleiter
- 9: Einkopplungsfläche
- 10: Auskopplungsfläche
- 11: Lichtleitabschnitt
- 12: Halter
- 13: Aufnahmetaschen
- 14: Rastvorrichtung
- 15: Öffnung
- 16: Rastzapfen
- 17: Grundhalterkörper
- 19: Rastnase
- 20: Hinterschnitt
- 21: Trennwand
- 22: Rastmittel
- 22a: Rastvorsprung
- 23: Gegenrastmittel
- 23a: Rasthinterschnitt
- 24: Anschlagsfläche
- 25: Gegenanschlagsfläche

## Patentansprüche

1. Anzeigevorrichtung, aufweisend wenigstens ein Anzeigemittel (3), eine Leiterplatte (6) mit wenigstens einem elektrischen Leuchtmittel (7), das zur Erzeugung von Licht aus elektrischer Energie auf der Leiterplatte (6) kontaktiert ist, und wenigstens einen Lichtleiter (8), der eine Einkopplungsfläche (9), eine Auskopplungsfläche (10) und einen Lichtleitabschnitt (11) aufweist, der ausgebildet ist, über die Einkopplungsfläche (9) eintretendes Licht des Leuchtmittels (7) an die Auskopplungsfläche (10) zu leiten, welche an das Anzeigemittel (3) optisch angekoppelt ist, sowie einen an der Leiterplatte (6) befestigten Halter (12), der den wenigstens einen Lichtleiter (8) trägt und der wenigstens eine Aufnahmetasche (13) aufweist, in die der wenigstens eine Lichtleiter (8) eingesetzt ist, **dadurch gekennzeichnet, dass** der wenigstens eine Lichtleiter (8) eine pyramidenstumpfförmige Grundgestalt aufweist und die Aufnahmetasche (13) eine korrespondierende Innenwandfläche aufweist, so dass der wenigstens eine Lichtleiter (8) in einer zur Ebene der Leiterplatte (6) lotrechten Montagerichtung in die Aufnahmetasche (13) passend einzustecken ist, wobei der wenigstens eine Lichtleiter (8) mindestens ein Rastmittel (22), insbesondere einen Rastvorsprung (22a) aufweist, welches Rastmittel (22) in einer in die Aufnahmetasche (13) formschlüssig eingesetzten Montagelage des Lichtleiters (8) an einem Gegenrastmittel (23), insbesondere einem zum Rastvorsprung (22a) korrespondierenden Rasthinterschnitt (23a) formschlüssig verrastet ist.

2. Anzeigevorrichtung nach Anspruch 1, **dadurch gekennzeichnet, dass** der Halter (12) wenigstens eine Rastvorrichtung (14) aufweist, die ausgebildet ist, den Halter (12) formschlüssig an der Leiterplatte (6) zu befestigen.

3. Anzeigevorrichtung nach Anspruch 2, **dadurch gekennzeichnet, dass** die Leiterplatte (6) wenigstens eine Öffnung (15) und/oder Aussparung aufweist und die wenigstens eine Rastvorrichtung (14) von einem Rastzapfen (16) des Halters (12) gebildet wird, der in einem eingerasteten Zustand des Halters (12) in die wenigstens eine Öffnung (15) der Leiterplatte (6) eingreift und/oder die wenigstens eine Aussparung der Leiterplatte (6) umgreift.

4. Anzeigevorrichtung nach einem der Ansprüche 1 bis 3, **dadurch gekennzeichnet, dass** der Halter (12) wenigstens eine erste Aufnahmetasche (13) aufweist, in die ein erster Lichtleiter (8) eingesetzt ist und wenigstens eine zweite Aufnahmetasche (13) aufweist, in die ein zweiter Lichtleiter (8) eingesetzt ist und zwischen jeweils zwei benachbarten Aufnahmetaschen (13) eine Trennwand (21) angeordnet ist, welche ausgebildet ist, den einen Lichtleiter (8) gegen Eintreten des aus dem jeweils anderen, benachbarten Lichtleiter (8) austretenden Lichts optisch abzuschirmen.

5. Anzeigevorrichtung nach einem der Ansprüche 1 bis 4, **dadurch gekennzeichnet, dass** die wenigstens eine Aufnahmetasche (13) ausgebildet ist, den wenigstens einen Lichtleiter (8) zumindest im Wesentlichen vollständig aufzunehmen, insbesondere lediglich unter Freilassen der Einkopplungsfläche (9) und der Auskopplungsfläche (10) einzuschließen.

6. Anzeigevorrichtung nach Anspruch 1, **dadurch gekennzeichnet, dass** der wenigstens eine Lichtleiter (8) eine zumindest im Wesentlichen rechteckige, insbesondere quadratische Auskopplungsfläche (10) aufweist und die Einkopplungsfläche (9) insbesondere kleiner als die Auskopplungsfläche (10) ist.

7. Anzeigevorrichtung nach einem der Ansprüche 1 bis 6, **dadurch gekennzeichnet, dass** der wenigstens eine Lichtleiter (8) mindestens eine Anschlagsfläche (24) aufweist, welche in einer in die Aufnahmetasche (13) formschlüssig eingesetzten Montagelage des Lichtleiters (8) an einer Gegenanschlagsfläche (25) des Halters (12) ansteht.

8. Haushaltsgerät, aufweisend eine Anzeigevorrichtung (5) nach einem der Ansprüche 1 bis 7.

## Claims

1. Display device, having at least one display means (3), a conductor board (6) with at least one electrical illuminant (7) which has contact with the conductor board (6) in order to generate light from electrical energy, and at least one light guide (8), which has a coupling-in surface (9), a coupling-out surface (10) and a light guiding portion (11), which is embodied to guide light from the illuminant (7) entering by way of the coupling-in surface (9) to the coupling-out surface (10), which is optically coupled to the display means (3), as well as a holder (12) fastened to the conductor board (6) and bearing the at least one light guide (8) and having at least one receiving pocket (13), into which the at least one light guide (8) is inserted, **characterised in that** the at least one light guide (8) has a truncated pyramid-shaped basic design and the receiving pocket (13) has a corresponding inner wall surface so that the at least one light guide (8) can be inserted so as to fit into the receiving pocket (13) in an assembly direction which is perpendicular to the plane of the conductor board (6), wherein the at least one light guide (8) has at least one latching means (22), in particular one latching projection (22a), which latching means (22), in an assembly position of the light guide (8) inserted into the receiving pocket (13) in a form-fit manner, latches with a counter latching means, in particular a latching undercut (23a) corresponding to the latching projection (22a), in a form-fit manner.

2. Display device according to claim 1, **characterised in that** the holder (12) has at least one latching device (14), which is embodied to fasten the holder (12) in a form-fit manner to the conductor board (6).

3. Display device according to claim 2, **characterised in that** the conductor board (6) has at least one opening (15) and/or cut-out, and the at least one latching device (14) is formed of a latching pin (16) of the holder (12), which, in the latched-in state of the holder (12), engages into the at least one opening (15) of the conductor board (6) and/or surrounds the at least one cut-out of the conductor board (6).

4. Display device according to one of claims 1 to 3, **characterised in that** the holder (12) has at least one first receiving pocket (13), into which a first light guide (8) is inserted, and at least one second receiving pocket (13), into which a second light guide (8) is inserted and a separating wall (21) is arranged between in each case two adjacent receiving pockets (13), which is embodied to optically shield the one light guide (8) against the ingress of light escaping from the respective other adjacent light guide (8).

5. Display device according to one of claims 1 to 4, **characterised in that** the at least one receiving pocket (13) is embodied to at least substantially completely receive the at least one light guide (8), in particular to incorporate the same solely by releasing the coupling-in surface (8) and the coupling-out surface (10).

6. Display device according to claim 1, **characterised in that** the at least one light guide (8) has an at least substantially rectangular, in particular square coupling-out surface (10), and the coupling-in surface (9) is in particular smaller than the coupling-out surface (10).

7. Display device according to one of claims 1 to 6, **characterised in that** the at least one light guide (8) has at least one stop surface (24), which, in an assembly position of the light guide (8) inserted into the receiving pocket (13) in a form-fit manner, abuts against a counter stop surface (25) of the holder (12).

8. Household appliance, having a display device (5) according to one of claims 1 to 7.

## Revendications

1. Dispositif d'affichage présentant au moins un moyen d'affichage (3), une carte de circuits imprimés (6) avec au moins un moyen d'éclairage électrique (7), mis en contact pour produire de la lumière d'énergie électrique sur la carte de circuits imprimés (6) et au moins un guide de lumière (8), comportant une surface de couplage (9), une surface de découplage (10) et une section de guide de lumière (11), configuré pour guider la lumière du moyen d'éclairage (7) entrant par la surface de couplage (9) à la surface de découplage (10), laquelle est couplée optiquement au moyen d'affichage (3), ainsi qu'un support (12) fixé à la carte de circuits imprimés (6), qui supporte le au moins un guide de lumière (8) et qui comporte au moins une niche (13), dans laquelle est inséré le au moins un guide de lumière (8), **caractérisé en ce que** le au moins un guide de lumière (8) présente une configuration fondamentale en pyramide tronquée et la niche (13) présente une surface de paroi intérieure correspondante, de sorte que le au moins un guide de lumière (8) est à enfoncer en s'emboîtant dans la niche (13) dans un sens de montage perpendiculaire à la surface de la carte de circuits imprimés (6), le au moins un guide de lumière (8) comportant au moins un moyen d'encliquetage (22), en particulier une saillie d'encliquetage (22a), lequel moyen d'encliquetage (22) s'encliquète par emboîtement dans un logement de montage du guide de lumière (8), inséré par emboîtement dans la niche (13), sur un moyen de contre-encliquetage (23), en particulier une contre-dépouille d'encliquetage (23a) correspondant à cette saillie d'encliquetage (22a).

2. Dispositif d'affichage selon la revendication 1, **caractérisé en ce que** le support (12) comporte au moins un dispositif d'encliquetage (14) configuré pour fixer le support (12) par emboîtement à la carte de circuits imprimés (6).

3. Dispositif d'affichage selon la revendication 2, **caractérisé en ce que** la carte de circuits imprimés (6) comporte au moins un orifice (15) et/ou un évidement et le au moins un dispositif d'encliquetage (14) est formé d'un téton d'encliquetage (16) du support (12). lequel s'engage, dans un état encliqueté du support (12) dans le au moins un orifice (15) de la carte de circuits imprimés (6) et/ou enveloppe le au moins un évidement de la carte de circuits imprimés (6).

4. Dispositif d'affichage selon l'une des revendications 1 à 3, **caractérisé en ce que** le support (12) comporte au moins une première niche (13) où s'insère un premier guide de lumière (8) et au moins une deuxième niche (13) où s'insère un deuxième guide de lumière (8) et entre chacune de deux niches (13) contigües est disposée une paroi de séparation (21), laquelle est configurée pour blinder optiquement un guide de lumière (8) contre l'entrée de la lumière sortant de l'autre guide de lumière (8) contigu.

5. Dispositif d'affichage selon l'une des revendications 1 à 4, **caractérisé en ce que** la au moins une niche (13) est réalisée pour loger le au moins un guide de lumière (8) au moins essentiellement complètement, en particulier pour englober uniquement en laissant libre la surface de couplage (9) et la surface de découplage (10).

6. Dispositif d'affichage selon la revendication 1, **caractérisé en ce que** le au moins un guide de lumière (8) présente une surface de découplage (10) au moins essentiellement rectangulaire, en particulier carrée et la surface de couplage (9) est en particulier plus petite que la surface de découplage (10).

7. Dispositif d'affichage selon l'une des revendications 1 à 6, **caractérisé en ce que** le au moins un guide de lumière (8) comporte au moins une surface de butée (24), laquelle se trouve dans un logement de montage du guide de lumière (8) inséré par emboîtement dans la niche (13), sur une surface de contre-butée (25) du support (12).

8. Appareil électroménager comportant un dispositif d'affichage (5) selon l'une des revendications 1 à 7.
